# EUROPEAN PATENT APPLICATION

(11) **EP 3 982 597 A1**
(43) Date of publication of application: **13.04.2022**
(21) Application number: 19933706.4
(22) Date of filing: 13.08.2019
(51) Int. Cl.: H04L 12/721, H04L 12/723

(54) **CLOUD NETWORK TRANSMISSION ROUTING METHOD AND SYSTEM**

(30) Priority: 21.06.2019 CN 201910542845
(71) Applicant: Wangsu Science & Technology Co., Ltd., Shanghai 200030 (CN)
(72) Inventor: GUO, Zhihong, Shanghai 200030 (CN); LI, Qingrong, Shanghai 200030 (CN)
(74) Representative: De Arpe Tejero, Manuel
(86) International application number: PCT/CN2019/100416
(87) International publication number: WO 2020/252873

(57) **Abstract**

Disclosed by the present application are a cloud network transmission routing method and system, the method being applicable to a BGP network comprising multiple subnets, each subnet comprising a data exchange system and multiple nodes, and the method comprising: the data exchange system of a source subnet receiving a BGP routing item sent from a source node, the BGP routing item comprising: a network segment identity of the source node and a corresponding community property value; according to the community property value, the data exchange system of the source subnet determining a target subnet, and sending the BGP routing item to a data exchange system of the target subnet; and the data exchange system of the target subnet receiving the BGP routing item, and according to the community property value, determining a target node and transmitting said item to the target node. The method and system provided by the present application may accurately control the target node receiving the BGP routing item so as to save cloud network transmission routing traffic.

## Description

### TECHNICAL FIELD

The present disclosure relates to a technical field of network transmission, and more particularly, relates to a cloud network transmission routing method and a system thereof.

### BACKGROUND

With the rapid development of Internet business, there are more and more nodes in a network, and inter-node communication becomes more frequently. When the nodes communicate with each other, data is often transmitted through a public network, which will increase operation costs of enterprises. At the same time, because network constructions of the public network can't meet a current business development, the public network traffic easily gets congested during peak traffic periods, thereby affecting business operations.

In order to avoid the above situation, a network architecture similar to a large enterprise structure can be applied to set up nodes and routes, that is, a plurality of branch routes are connected through a central route, and each branch route is then connected to a plurality of nodes. Each node of the branch route can record its own network segment in a routing table, and announce the routing table to nearby nodes and the branch route connected with the node. The branch route can send the routing table received from a source node to the central route, and other connected branch routes and nodes. The central route forwards the routing table received from the aforementioned branch route to the other branch routes. The other branch routes forward the routing table to each node that is connected to the branch route, respectively. One node can add the routing table received from other nodes to its own routing table. In this way, the routing table of each node in the network records the network segments of other nodes. Accordingly, data transmission can be routed from the source node to any other nodes.

In the process of implementing the present disclosure, Applicants have found that the existing technologies have at least the following problems: in the process of transmitting the routing table, since the network segment of the source node is to be sent to each node in the network, a large amount of data traffic is required.

### SUMMARY

The technical problems to be solved: in view of the shortcomings of the related art, the present disclosure relates to a cloud network transmission routing method and a system thereof, which can accurately control a target node configured to receive the network segments so as to save cloud network transmission routing traffic.

In an aspect, the present disclosure provides a cloud network transmission routing method applied to a BGP network, the BGP network including a plurality of subnets, each subnet including a data exchange system and a plurality of nodes, the method performed by the data exchange system of a source subnet. The method includes:
receiving a BGP routing entry sent from a source node, according to a preset attribute configuration rule; wherein the BGP routing entry includes a network segment identification of the source node and a community attribute value;
determining a target subnet according to the community attribute value, and sending the BGP routing entry to the data exchange system of the target subnet, according to a preset attribute configuration rule, so that the data exchange system of the target subnet sends the BGP routing entry to a target node, according to the community attribute value and the preset attribute configuration rule.

In another aspect, the present disclosure also provides a cloud network transmission routing method applied to a BGP network, the BGP network including a plurality of subnets, each subnet including a data exchange system and a plurality of nodes, the method performed by the data exchange system of a target subnet. The method includes:
receiving a BGP routing entry sent from the data exchange system of a source subnet, according to a preset attribute configuration rule; wherein the BGP routing entry includes a network segment identification of a source node and a community attribute value, the community attribute value of the BGP routing entry that has been received matched with the target subnet;
determining a target node according to the community attribute value, and sending the BGP routing entry to the target node according to the preset attribute configuration rule.

In another aspect, the present disclosure also provides a cloud network transmission routing system applied to a BGP network, the BGP network including a plurality of subnets, the plurality of subnets including a source subnet and a target subnet; the source subnet including a data exchange system of the source subnet and at least one source node, and the target subnet including a data exchange system of the target subnet and at least one target node.
the data exchange system of the source subnet configured to receive a BGP routing entry sent from the source node, according to a preset attribute configuration rule, determine the target subnet according to a community attribute value of the BGP routing entry, and send the BGP routing entry to the data exchange system of the target subnet, according to the preset attribute configuration rule; wherein the BGP routing entry includes a network segment identification of the source node and the community attribute value;
the data exchange system of the target subnet configured to receive the BGP routing entry according the preset attribute configuration rule, determine the target node according to the community attribute value, and send the network segment identification of the source node to the target node, according to the preset attribute configuration rule.

As can be seen from the above description, according to the technical solutions provided by the present disclosure, the present disclosure provides advantages as below: the data exchange system of the source subnet is configured to receive the BGP routing entry sent from the source node, the BGP routing entry including the network segment identification of a network segment that is needed to be announced and a community attribute value, and the community attribute value including a target partition identification matched with the BGP routing entry, an identification whether the BGP routing entry is announced, and a target node identification. The target subnet that is needed to be announced by the network segment identification of the BGP routing entry can be determined by using the target partition identification matched with the BGP routing entry, and the identification whether the BGP routing entry is announced; the target node identification can be configured to determine the target node of the network segment identification in the BGP routing entry that is needed to be announced in the target subnet. At the same time, determining whether the preset attribute configuration rule of the routing entry is received or sent by the data exchange system of each subnet and each node, according to the community attribute value, so that the BGP routing entry can be accurately controlled to be sent from which one of the source nodes to which one of the target nodes, in this way, a large amount of data traffic that the network segments needed to be announced are sent to all nodes of the network can be avoided, so as to save the traffic of the cloud network transmission routing. Meanwhile, the BGP routing entry is only received by a designated target node, which can avoid possibility for obtaining the BGP routing entry from other nodes, and improve security of the cloud network transmission routing.

### BRIEF DESCRIPTION OF THE DRAWINGS

In order to more clearly understand the technical solution hereinafter in embodiments of the present disclosure, a brief description to the drawings used in detailed description of embodiments hereinafter is provided thereof. Obviously, the drawings described below are some embodiments of the present disclosure, for one of ordinary skill in the art, other drawings can be obtained according to the drawings below on the premise of no creative work.
FIG. 1 is a flowchart of a cloud network transmission routing method according to an embodiment of the present disclosure;
FIG. 2 is a flowchart of the cloud network transmission routing method for performing a data exchange system of a source subnet according to an embodiment of the present disclosure;
FIG. 3 is a flowchart of the cloud network transmission routing method for performing a data exchange system of a target subnet according to an embodiment of the present disclosure; and
FIG. 4 is a schematic diagram of a cloud network transmission routing system according to an embodiment of the present disclosure.

### DETAILED DESCRIPTION

To make the objectives, technical solutions and advantages of the present disclosure clearer, embodiments of the present disclosure are further described as below in detail with reference to the accompanying drawings.

The present disclosure provides a cloud network transmission routing method applied to a border gateway protocol (BGP) network. The BGP network can include a plurality of subnets that each subnet can include a data exchange system and a plurality of nodes.

The data exchange system can include at least one core switch, or include at least one core switch and at least one relay switch.

In the BGP network, a BGP session can be established between the data exchange system and a plurality of nodes, and so does between the core switch and the relay switch in the data exchange system. The node can use its own network segment as a BGP routing entry and then send to other nodes in the BGP network through the data exchange system, so that the two nodes can route data packets.

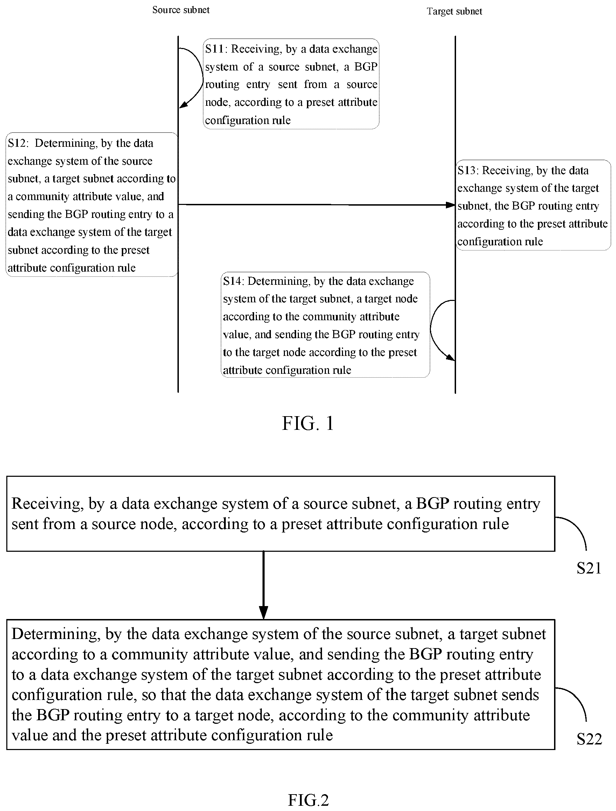

FIG. 1 is a flowchart of the cloud network transmission routing method according to an embodiment of the present disclosure. Referring to FIG. 1, the method can include following steps.

Step S11, receiving, by the data exchange system of a source subnet, a BGP routing entry sent from a source node, according to a preset attribute configuration rule.

The source subnet can be any subnet in the BGP network. The source subnet can be a subnet for sending BGP routing entries to other subnets.

The data exchange system of the source subnet can receive the BGP routing entry sent from the source node, according to the preset attribute configuration rule.

In an embodiment of the present disclosure, the BGP routing entry can include: a network segment identification of the source node and a community attribute value.

In an embodiment of the present disclosure, the community attribute value of the BGP routing entry can include: a target partition identification matched with the BGP routing entry, an identification whether the BGP routing entry is announced, and a target node identification.

The target partition identification can be configured to identify a target subnet, i.e., the subnet for receiving the BGP routing entry.

The identification whether the BGP routing entry is announced, can be configured to identify whether the network segment identification of the BGP routing entry is announced to the target subnet.

The target node identification can be configured to identify the target node of the target subnet, that is, a node of the target subnet that receives the BGP routing entry.

In an embodiment of the present disclosure, the community attribute value can be shown in a form of "AAAX: 1 NN". Referring to table 1, wherein "AAA" represents the target subnet where the target node is located in the BGP routing entry, i.e. the target partition identification. Specifically, an area code of a city corresponding to the target subnet can be taken as the target partition identification. For example, 010 represents Beijing, 021 represents Shanghai, and 020 represents Guangzhou. "X" represents whether or not to announce to the target subnet, that is, an identification whether the BGP routing entry is announced. Basically, when the "X" is 1, it is meant that the target subnet is announced; when the "X" is 0, it is meant that the target subnet is not announced. "NN" represents the target node that needs to be announced, i.e., the target node identification. For example, when the "NN" is "01", it represents a node identified as "01" in the target subnet. It should be noted that, when the "AAA" is "999", it indicates that the target subnet where the target node in the BGP routing entry are all subnets in the BGP network. When the "NN" is "99", it indicates that the target nodes that need to be announced are all nodes of the target subnet. When the "AAA" is "999", and the "NN" is "99", that is, when the community attribute value is "9991:199", it represents that the identification network segment is announced to a whole network.

Table 1 shows the network segment identification of the source node in the BGP routing entry sent from the source node, a corresponding community attribute value, and an area needed to be announced by the BGP routing entry. Referring to Table 1, in a first BGP routing entry, the source node is "Beijing 1", the segment identification needed to be announced is "1.0.0.0/24", and the BGP routing entry includes three community attribute values: 0211:199, 0201:199 and 0101:199, declaration areas corresponding to attribute values of the BGP routing entry respectively as follows: a Shanghai area, a Guangzhou area, a Beijing area. In a fourth BGP routing entry, the source node is "Beijing 2", the segment identification needed to be announced is "2.0.1.0/24", and the BGP routing entry includes two community attribute values: 9991:199 and 0210:102, declaration areas corresponding to attribute values of the BGP routing entry are all areas except a node Shanghai 2.

**Table 1**

| Source node | Network segment identification | Community attribute value | Area that is announced |
|---|---|---|---|
| Beijing 1 | 1.0.0.0/24 | 0211:199, 0201:199, 0101:199 | Shanghai area/Guangzhou area/ Beijing area |
| Beijing 1 | 1.0.1.0/24 | 0211:199, 0201:101 | Shanghai area /Node Guangzhou 1 |
| Beijing 2 | 2.0.0.0/24 | 0211:101 | Node Shanghai 1 |
| Beijing 2 | 2.0.1.0/24 | 9991:199, 0210:102 | All areas except Node Shanghai 2 |

In an embodiment of the present disclosure, the data exchange system can include at least one core switch. The core switch is configured to send the BGP routing entry to the data exchange system of the target subnet, according to the preset attribute configuration rule.

In an embodiment of the present disclosure, the core switch of the source subnet receives the BGP routing entry sent from the source node, according to the preset attribute configuration rule.

In an embodiment of the present disclosure, after the core switch receives the BGP routing entry sent from the source node, according to the preset attribute configuration rule, the method further includes: the core switch is further configured to add a source area identification to the community attribute value of the BGP routing entry.

The source area identification can be configured to identify a specific source subnet. Specifically, the source area identification can be represented in a form of "BBB: BBB" which is the area code of the city corresponding to the source subnet. For example, when the source subnet corresponding to the BGP routing entry is Beijing, the source area identification can be "010: 010".

In an embodiment of the present disclosure, the data exchange system further includes at least one relay switch. The relay switch of the source subnet is configured to receive the BGP routing entry sent from the source node, and then send the BGP routing entry to the core switch of the source subnet. Accordingly, the core switch can receive the BGP routing entry sent from the relay switch.

In an embodiment of the present disclosure, after the relay switch of the source subnet receives the BGP routing entry sent from the source node, the method further includes: adding, by the relay switch of the source subnet, the source area identification to the community attribute value of the BGP routing entry. Accordingly, the relay switch of the source subnet can be configured to send the BGP routing entry added with the source area identification, to the core switch of the source subnet.

In an embodiment of the present disclosure, the method can further include: determining, by the core switch, whether the source area identification is included in the community attribute value of the BGP routing entry; if the source area identification is included in the community attribute value of the BGP routing entry, the core switch is configured to send the BGP routing entry to other nodes of the source subnet.

In the above embodiment, the source subnet that sends the BGP routing entry can be known by the core switch through the source area identification. Furthermore, the core switch can be configured to determine whether the BGP routing entry is sent by a node of a subnet to which the BGP routing entry belongs, that is, determining whether a source network area of the BGP routing entry is a subnet to which the BGP routing entry belongs. If the core switch determines that the BGP routing entry is not sent by the node of the subnet to which the BGP routing entry belongs, the core switch does not send the BGP routing entry to the core switches of other areas. If the core switch determines that the BGP routing entry is sent by the node of the subnet to which the BGP routing entry belongs, the core switch can send the BGP routing entry to the data exchange system of a target area. In this way, each BGP routing entry can be announced to other areas by the source network area corresponding to the routing entry, which can ensure security of the network.

For example, after routing tables shown in Table 1 are respectively sent to the relay switch of the Beijing area by the nodes "Beijing 1" and "Beijing 2", the relay switch of the Beijing area can add the source area identification with "010: 010" to four routing entries shown in Table 1, respectively, thereby the routing table can be shown in Table 2.

**Table 2**

| Source node | Network segment identification | Community attribute value | Area that is announced |
|---|---|---|---|
| Beijing 1 | 1.0.0.0/24 | 0211:199, 0201:199, 0101:199, 010:010 | Shanghai area/Guangzhou area/ Beijing area |
| Beijing 1 | 1.0.1.0/24 | 0211:199, 0201:101, 010:010 | Shanghai area /Node Guangzhou 1 |
| Beijing 2 | 2.0.0.0/24 | 0211:101, 010:010 | Node Shanghai 1 |
| Beijing 2 | 2.0.1.0/24 | 9991:199, 0210:102, 010:010 | All areas except Node Shanghai 2 |

In an embodiment of the present disclosure, the preset attribute configuration rule includes: determining a rule whether the data exchange system of each subnet and each node receive or send the BGP routing entry, according to the community attribute value. For example, the preset attribute configuration rule can be shown in Table 3. Referring to Table 3, the source area identification can be added by the relay switch of the data exchange system, for the routing entry flowing from the node to the relay switch. For the routing entry flowing from the relay switch to the node, the routing entries with the community attribute values of "AAA1:1NN", "AAA1:199" or "9991:199" can be released, and the routing entries with the community attribute value of "AAA0:1NN" can be prevented. All routing entries flowing from the core switch to the relay switch and from the relay switch to the core switch can be released. Referring to Table 3, the core switch of the data exchange system can be configured to: release the routing entries flowing from the core switch to the relay switch and from the relay switch to the core switch, and add the source area identification, for the routing entry flowing from the node to the core switch; for the routing entry flowing from the relay switch to the node, the routing entries with the community attribute values of "AAA1:1NN", "AAA1:199" or "9991:199" can be released, and the routing entries with the community attribute value of "AAA0:1NN" can be prevented. For the routing entry flowing from the core switch of the source subnet to other core switches, the routing entries that includes the community attribute values with the source area identification are released. For the routing entries flowing from other core switches to the core switch of the target subnet, the routing entries with the community attribute values of "AAA1:1NN" or "9991:199" can be released, and the routing entries with the community attribute value of "AAA0:1NN" can be prevented.

**Table 3**

| Apparatus in a data exchange system | Direction of nodes inflow and outflow | Rule |
|---|---|---|
| Relay switch | Flowing from the node to a relay switch | Adding a source area identification |
| | Flowing from the relay switch to the node | Releasing the routing entry with the community attribute value of "AAA1: INN" |
| | | Preventing the routing entry with the community attribute value of "AAA0: 1NN" |
| | | Releasing the routing entry with the community attribute value of "AAA1: 199" |
| | | Releasing the routing entry with the community attribute value of "9991:199" |
| | Flowing from the core switch to the relay switch | Releasing all routing entries |
| | Flowing from the relay switch to the core switch | Releasing all routing entries |
| Core switch | Flowing from the relay switch to the core switch | Releasing all routing entries |
| | Flowing from the core switch to the relay switch | Releasing all routing entries |
| | Flowing from the node to the core switch | Adding a source area identification |
| | Flowing from the core switch to a routing entry of the node | Releasing the routing entry with the community attribute value of "AAA1: INN" |
| | | Preventing the routing entry with the community attribute value of "AAA0: 1NN" |
| | | Releasing the routing entry with the community attribute value of "AAA1: 199" |
| | | Releasing the routing entry with the community attribute value of "9991:199" |
| | Flowing from the core switch to other core switches | Releasing all routing entries that includes the community attribute value with the source area identification |
| | Flowing from other core switches to the core switch | Releasing the routing entry with the community attribute value of "AAA1: INN" |
| | | Preventing the routing entry with the community attribute value of "AAA0: 199" |
| | | Releasing the routing entry with the community attribute value of "9991:199" |

Step S12, determining, by the data exchange system of the source subnet, the target subnet according to the community attribute value, and sending the BGP routing entry to the data exchange system of the target subnet, according to the preset attribute configuration rule.

The data exchange system of the source subnet can be configured to determine the target subnet according to the community attribute value.

In an embodiment of the present disclosure, the step of determining, by the data exchange system of the source subnet, the target subnet according to the community attribute value, can specifically include: determining the source subnet, according to the target partition identification matched with the BGP routing entry, and the identification whether the BGP routing entry is announced.

The core switch of the source subnet is configured to send the BGP routing entry to the data exchange system of the target subnet, according to the preset attribute configuration rule. Specifically, the data exchange system can be controlled to send the BGP routing entry to the data exchange system of the target subnet, according to the preset attribute configuration rule.

Step S13, receiving, by the data exchange system of the target subnet, the BGP routing entry according to the preset attribute configuration rule.

The data exchange system of the target subnet can be configured to receive the BGP routing entry.

For example, for the routing entries of Table 2, BGP routing tables received by the data exchange system of the Beijing area can be shown in Table 4; BGP routing tables received by the data exchange system of the Shanghai area can be shown in Table 5; and BGP routing tables received by the data exchange system of the Guangzhou area can be shown in Table 6.

**Table 4**

| Network segment identification | Community attribute value | Area that is announced |
|---|---|---|
| 1.0.0.0/24 | 0211:199, 0201:199, 0101:199, 010:010 | Shanghai area/Guangzhou area/ Beijing area |
| 1.0.1.0/24 | 0211:199, 0201:101, 010:010 | Shanghai area /Node Guangzhou 1 |
| 2.0.0.0/24 | 0211:101, 010:010 | Node Shanghai 1 |
| 2.0.1.0/24 | 9991:199, 0210:102, 010:010 | All areas except Node Shanghai 2 |

**Table 5**

| Network segment identification | Community attribute value | Area that is announced |
|---|---|---|
| 1.0.0.0/24 | 0211:199, 0201:199, 0101:199, 010:010 | Shanghai area/Guangzhou area/ Beijing area |
| 1.0.1.0/24 | 0211:199, 0201:101, 010:010 | Shanghai area /Node Guangzhou 1 |
| 2.0.0.0/24 | 0211:101, 010:010 | Node Shanghai 1 |
| 2.0.1.0/24 | 9991:199, 0210:102, 010:010 | All areas except Node Shanghai 2 |

**Table 6**

| Network segment identification | Community attribute value | Area that is announced |
|---|---|---|
| 1.0.0.0/24 | 0211:199, 0201:199, 0101:199, 010:010 | Shanghai area/Guangzhou area/ Beijing area |
| 1.0.1.0/24 | 0211:199, 0201:101, 010:010 | Shanghai area /Node Guangzhou 1 |
| 2.0.1.0/24 | 9991:199, 0210:102, 010:010 | All areas except Node Shanghai 2 |

Step S14, determining, by the data exchange system of the target subnet, the target node according to the community attribute value, and sending the BGP routing entry to the target node according to the preset attribute configuration rule.

After the data exchange system of the target subnet receives the BGP routing entry, the data exchange system of the target subnet can be configured to determine the target node according to the community attribute value, and send the BGP routing entry to the target node.

In an embodiment of the present disclosure, the data exchange system of the target subnet is configured to receive the BGP routing entry, and determine the target node according to the community attribute value, which can specifically include: determining the target node according to the target node identification of the community attribute value. For example, after the data exchange system of the Beijing area receives the BGP routing table of Table 4, a first routing entry and a fourth routing entry of Table 4 can be sent to all nodes of the Beijing area. After the data exchange system of the Shanghai area receives the BGP routing table of Table 5, a first routing entry and a second routing entry of Table 5 can be sent to all nodes of the Shanghai area, a third routing entry of Table 5 can be sent to the node Shanghai 1 of the Shanghai area, and a fourth routing entry of Table 5 can be sent to all nodes except the node Shanghai 2 of the Shanghai area. After the data exchange system of the Guangzhou area receives the BGP routing table of Table 6, a first routing entry and a third routing entry of Table 6 can be sent to all nodes of the Guangzhou area, and a second routing entry of Table 6 can be sent to the node Guangzhou 1 of the Guangzhou area. In summary, the routing tables learned by the nodes of the Beijing area can be shown in table 7, the routing tables learned by the node Shanghai 1 of the Shanghai area can be shown in table 8, the routing tables learned by the node Shanghai 2 of the Shanghai area can be shown in table 9, the routing tables learned by other nodes of the Shanghai area can be shown in table 10, the routing tables learned by the node Guangzhou 1 of the Guangzhou area can be shown in table 11, and the routing tables learned by other nodes of the Guangzhou area can be shown in table 12.

**Table 7**

| Network segment identification | Community attribute value | Area that is announced |
|---|---|---|
| 1.0.0.0/24 | 0211:199, 0201:199, 0101:199, 010:010 | Shanghai area/Guangzhou area/ Beijing area |
| 2.0.1.0/24 | 9991:199, 0210:102, 010:010 | All areas except Node Shanghai 2 |

**Table 8**

| Network segment identification | Community attribute value | Area that is announced |
|---|---|---|
| 1.0.0.0/24 | 0211:199, 0201:199, 0101:199, 010:010 | Shanghai area/Guangzhou area/ Beijing area |
| 1.0.1.0/24 | 0211:199, 0201:101, 010:010 | Shanghai area /Node Guangzhou 1 |
| 2.0.0.0/24 | 0211:101, 010:010 | Node Shanghai 1 |
| 2.0.1.0/24 | 9991:199, 0210:102, 010:010 | All areas except Node Shanghai 2 |

**Table 9**

| Network segment identification | Community attribute value | Area that is announced |
|---|---|---|
| 1.0.0.0/24 | 0211:199, 0201:199, 0101:199, 010:010 | Shanghai area/Guangzhou area/ Beijing area |
| 1.0.1.0/24 | 0211:199, 0201:101, 010:010 | Shanghai area /Node Guangzhou 1 |
| 2.0.0.0/24 | 0211:101, 010:010 | Node Shanghai 1 |

**Table 10**

| Network segment identification | Community attribute value | Area that is announced |
|---|---|---|
| 1.0.0.0/24 | 0211:199, 0201:199, 0101:199, 010:010 | Shanghai area/Guangzhou area/ Beijing area |
| 1.0.1.0/24 | 0211:199, 0201:101, 010:010 | Shanghai area /Node Guangzhou 1 |
| 2.0.1.0/24 | 9991:199, 0210:102, 010:010 | All areas except Node Shanghai 2 |

**Table 11**

| Network segment identification | Community attribute value | Area that is announced |
|---|---|---|
| 1.0.0.0/24 | 0211:199, 0201:199, 0101:199, 010:010 | Shanghai area/Guangzhou area/ Beijing area |
| 1.0.1.0/24 | 0211:199, 0201:101, 010:010 | Shanghai area /Node Guangzhou 1 |
| 2.0.1.0/24 | 9991:199, 0210:102, 010:010 | All areas except Node Shanghai 2 |

**Table 12**

| Network segment identification | Community attribute value | Area that is announced |
|---|---|---|
| 1.0.0.0/24 | 0211:199, 0201:199, 0101:199, 010:010 | Shanghai area/Guangzhou area/ Beijing area |
| 2.0.1.0/24 | 9991:199, 0210:102, 010:010 | All areas except Node Shanghai 2 |

In the embodiment of the present disclosure, the data exchange system of the source subnet is configured to receive the BGP routing entry sent from the source node, the BGP routing entry including the network segment identification of a network segment that is needed to be announced and a community attribute value, and the community attribute value including a target partition identification matched with the BGP routing entry, an identification whether the BGP routing entry is announced, and a target node identification. The target subnet that is needed to be announced by the network segment identification of the BGP routing entry can be determined by using the target partition identification matched with the BGP routing entry, and the identification whether the BGP routing entry is announced; the target node identification can be configured to determine the target node of the network segment identification in the BGP routing entry that is needed to be announced in the target subnet. At the same time, determining whether the preset attribute configuration rule of the routing entry is received or sent by the data exchange system of each subnet and each node, according to the community attribute value, so that the BGP routing entry can be accurately controlled to be sent from which one of the source nodes to which one of the target nodes, in this way, a large amount of data traffic that the network segments needed to be announced are sent to all nodes of the network can be avoided, so as to save the traffic of the cloud network transmission routing. Meanwhile, the BGP routing entry is only received by a designated target node, which can avoid possibility for obtaining the BGP routing entry from other nodes, and improve security of the cloud network transmission routing.

A cloud network transmission routing method for performing a data exchange system of a source subnet according to an embodiment of the present disclosure is provided. FIG. 2 is a flowchart of the cloud network transmission routing method for performing the data exchange system of the source subnet according to the present disclosure.

Referring to FIG. 2, the cloud network transmission routing method includes the following steps.

Step S21, receiving, by the data exchange system of the source subnet, a BGP routing entry sent from a source node, according to a preset attribute configuration rule.

The BGP routing entry can include: a network segment identification of the source node and a community attribute value.

In an embodiment of the present disclosure, the community attribute value of the BGP routing entry can include: a target partition identification matched with the BGP routing entry, an identification whether the BGP routing entry is announced, and a target node identification.

In an embodiment of the present disclosure, the data exchange system includes at least one core switch. The data exchange system of the source subnet is configured to send the BGP routing entry to the data exchange system of a target subnet, according to the preset attribute configuration rule, which can include: the core switch is configured to send the BGP routing entry to the data exchange system of the target subnet, according to the preset attribute configuration rule. The data exchange system of the source subnet is configured to receive the BGP routing entry sent from the source node, according to the preset attribute configuration rule, which can include: the core switch of the data exchange system in the source subnet is configured to receive the BGP routing entry sent from the source node, according to the preset attribute configuration rule.

In an embodiment of the present disclosure, after the core switch receives the BGP routing entry sent from the source node, according to the preset attribute configuration rule, the core switch is further configured to add a source area identification to the community attribute value of the BGP routing entry.

In an embodiment of the present disclosure, the data exchange system further includes at least one relay switch, the relay switch of the source subnet configured to receive the BGP routing entry sent from the source node, according to the preset attribute configuration rule, and send the BGP routing entry to the core switch of the source subnet. The core switch receives the BGP routing entry sent from the relay switch, according to the preset attribute configuration rule.

Furthermore, after the relay switch of the source subnet receives the BGP routing entry sent from the source node, the method further includes: adding, by the relay switch, a source area identification to the community attribute value of the BGP routing entry.

In an embodiment of the present disclosure, the method can further include: determining, by the core switch, whether the source area identification is included in the community attribute value of the BGP routing entry; if the source area identification is included in the community attribute value of the BGP routing entry, the core switch is configured to send the BGP routing entry to other nodes of the source subnet.

In an embodiment of the present disclosure, the preset attribute configuration rule includes: determining a rule whether the data exchange system of each subnet and each node receive or send the BGP routing entry, according to the community attribute value.

In an embodiment of the present disclosure, the target subnet is at least one partition of the BGP network. The source subnet is any subnet of the BGP network.

Step S22, determining, by the data exchange system of the source subnet, the target subnet according to the community attribute value, and sending the BGP routing entry to the data exchange system of the target subnet according to the preset attribute configuration rule, so that the data exchange system of the target subnet sends the BGP routing entry to a target node, according to the community attribute value and the preset attribute configuration rule.

In an embodiment of the present disclosure, the step of determining, by the data exchange system of the source subnet, the target subnet according to the community attribute value, can include: determining the target subnet, according to the target partition identification matched with the BGP routing entry, and the identification whether the BGP routing entry is announced.

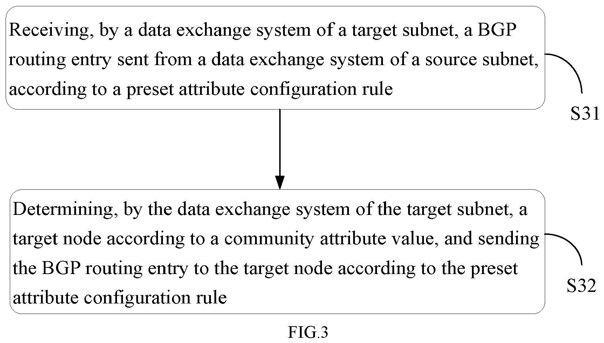

A cloud network transmission routing method for performing a data exchange system of a target subnet according to an embodiment of the present disclosure is provided. FIG. 3 is a flowchart of the cloud network transmission routing method for performing the data exchange system of the target subnet according to the present disclosure.

Referring to FIG. 3, the cloud network transmission routing method includes the following steps.

Step S31, receiving, by the data exchange system of the target subnet, a BGP routing entry sent from a data exchange system of a source subnet, according to a preset attribute configuration rule.

Furthermore, the target subnet is at least one partition of the BGP network. The source subnet is at least one partition of the BGP network.

The BGP routing entry can include: a network segment identification of the source node and a community attribute value.

In an embodiment of the present disclosure, the community attribute value of the BGP routing entry can include: a target partition identification matched with the BGP routing entry, an identification whether the BGP routing entry is announced, and a target node identification.

The community attribute value of the BGP routing entry that has been received can match with the target subnet. That is, the target subnet can match with both the target partition identification in the community attribute value that matches with the BGP routing entry, and the identification whether the BGP routing entry is announced.

Step S32, determining, by the data exchange system of the target subnet, a target node according to the community attribute value, and sending the BGP routing entry to the target node according to the preset attribute configuration rule.

In an embodiment of the present disclosure, the step of determining, by the data exchange system of the target subnet, the target node according to the community attribute value, includes: the target node is determined by the data exchange system of the target subnet, according to the target node identification of the community attribute value.

In an embodiment of the present disclosure, the preset attribute configuration rule includes: determining a rule whether the data exchange system of each subnet and each node receive or send the BGP routing entry, according to the community attribute value.

A cloud network transmission routing system according to an embodiment of the present disclosure is also provided.

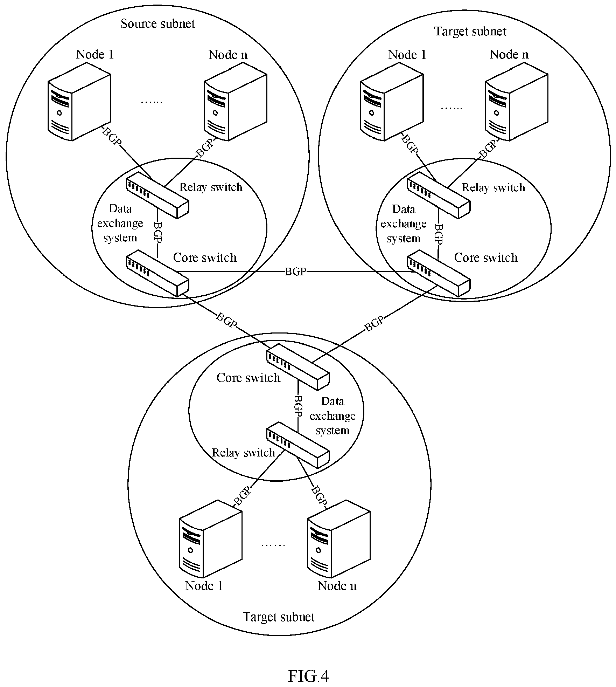

FIG. 4 is a schematic diagram of the cloud network transmission routing system according to an embodiment of the present disclosure. Referring to FIG. 4, the cloud network transmission routing system is applied to a BGP network, and the BGP network includes a plurality of subnets. The plurality of subnets can include a source subnet and a target subnet. The source subnet can be a subnet for sending the BGP routing entry and the target subnet can be a subnet for receiving the BGP routing entry.

Each subnet includes a data exchange system and a plurality of nodes, and a BGP session is established between the data exchange system and each node. Specifically, the source subnet can include: a data exchange system of the source subnet and at least one source node. The target subnet can include a data exchange system of the target subnet and at least one target node.

The data exchange system of the source subnet is configured to receive the BGP routing entry sent from the source node, according to a preset attribute configuration rule, determine the target subnet according to a community attribute value of the BGP routing entry, and send the BGP routing entry to the data exchange system of the target subnet, according to the preset attribute configuration rule; wherein the BGP routing entry includes a network segment identification of the source node and the community attribute value.

The data exchange system of the target subnet is configured to receive the BGP routing entry according the preset attribute configuration rule, determine the target node according to the community attribute value, and send a network segment identification of the source node to the target node, according to the preset attribute configuration rule.

In an embodiment of the present disclosure, the data exchange system of the source subnet can include at least one core switch configured to receive the BGP routing entry.

In an embodiment of the present disclosure, the data exchange system of the source subnet further includes at least one relay switch. The relay switch of the source subnet is configured to receive the BGP routing entry sent from the source node, and then send the BGP routing entry to the core switch according to the preset attribute configuration rule. Accordingly, the core switch can receive the BGP routing entry sent from the relay switch.

In an embodiment of the present disclosure, the core switch of the source subnet can further be configured to determine whether the source area identification is included in the community attribute value of the BGP routing entry; if the source area identification is included in the community attribute value of the BGP routing entry, the core switch is configured to send the BGP routing entry to other nodes of the source subnet.

In an embodiment of the present disclosure, after the relay switch of the source subnet receives the BGP routing entry sent from the source node, the relay switch of the source subnet is further configured to add a source area identification to the community attribute value of the BGP routing entry.

It should be noted that the cloud network transmission routing system provided by the foregoing embodiments has a similar concept as the cloud network transmission routing method embodiments. For specific implementation processes of the system embodiments, refer to the method embodiments, details of which are not described again here.

Through the description of the above embodiments, one of ordinary skill in the art can clearly understand that the various embodiments can be implemented by means of software plus a necessary general hardware platform, and of course, can also be implemented by hardware. Based on such understanding, the above-described technical solutions can be embodied in the form of software products in essence or in the form of software products, which can be stored in a computer-readable storage medium such as ROM/RAM, magnetic discs, optical discs, etc., and include a series of instructions for causing a computer device (which can be a personal computer, server, or network device, etc.) to perform the methods described in various embodiments or portions of the embodiments.

Although the present disclosure has been described as above with reference to preferred embodiments, these embodiments are not intended to limit the present disclosure. Any modification, equivalent replacement and improvement made within the spirit and principle of the present disclosure shall fall into the protection scope of the present disclosure.

## Claims

1. A cloud network transmission routing method applied to a BGP network, the BGP network comprising a plurality of subnets, each subnet comprising a data exchange system and a plurality of nodes, the method performed by the data exchange system of a source subnet and comprising:
receiving a BGP routing entry sent from a source node, according to a preset attribute configuration rule; wherein the BGP routing entry comprises a network segment identification of the source node and a community attribute value;
determining a target subnet according to the community attribute value, and sending the BGP routing entry to the data exchange system of the target subnet, according to a preset attribute configuration rule, so that the data exchange system of the target subnet sends the BGP routing entry to a target node, according to the community attribute value and the preset attribute configuration rule.

2. The method as claimed in claim 1, wherein the community attribute value comprises a target partition identification matched with the BGP routing entry, an identification whether the BGP routing entry is announced, and a target node identification.

3. The method as claimed in claim 2, wherein the step of determining a target subnet according to the community attribute value, comprises: determining the target subnet, according to the target partition identification matched with the BGP routing entry, and the identification whether the BGP routing entry is announced.

4. The method as claimed in claim 1, wherein the data exchange system comprises at least one core switch;
the step of sending the BGP routing entry to the data exchange system of the target subnet, according to the preset attribute configuration rule, comprising: sending, by the core switch of the source subnet, the BGP routing entry to the data exchange system of the target subnet, according to the preset attribute configuration rule.

5. The method as claimed in claim 4, wherein the step of receiving the BGP routing entry sent from the source node, according to the preset attribute configuration rule, comprises: receiving, by the core switch of the source subnet, the BGP routing entry sent from the source node, according to the preset attribute configuration rule.

6. The method as claimed in claim 5, wherein after the core switch receives the BGP routing entry sent from the source node, according to the preset attribute configuration rule, the method further comprises: adding, by the core switch, a source area identification to the community attribute value of the BGP routing entry.

7. The method as claimed in claim 4, wherein the data exchange system further comprises at least one relay switch, the relay switch of the source subnet configured to receive the BGP routing entry sent from the source node according to the preset attribute configuration rule, and send the BGP routing entry to the core switch of the source subnet; and wherein
the core switch receives the BGP routing entry sent from the relay switch, according to the preset attribute configuration rule.

8. The method as claimed in claim 7, wherein after the relay switch of the source subnet receives the BGP routing entry sent from the source node, the method further comprises: adding, by the relay switch, a source area identification to the community attribute value of the BGP routing entry.

9. The method as claimed in claim 5 or claim 7, wherein the method further comprises:
determining, by the core switch, whether the source area identification is comprised in the community attribute value of the BGP routing entry;
if the source area identification is comprised in the community attribute value of the BGP routing entry, the core switch sends the BGP routing entry to other nodes of the source subnet.

10. The method as claimed in claim 1, wherein the preset attribute configuration rule comprises: determining a rule whether the data exchange system of each subnet and each node receive or send the BGP routing entry, according to the community attribute value.

11. A cloud network transmission routing method applied to a BGP network, the BGP network comprising a plurality of subnets, each subnet comprising a data exchange system and a plurality of nodes, the method performed by the data exchange system of a target subnet and comprising:
receiving a BGP routing entry sent from the data exchange system of a source subnet, according to a preset attribute configuration rule; wherein the BGP routing entry comprises a network segment identification of a source node and a community attribute value; the community attribute value of the BGP routing entry that has been received matched with the target subnet;
determining a target node according to the community attribute value, and sending the BGP routing entry to the target node according to the preset attribute configuration rule.

12. The method as claimed in claim 11, wherein the community attribute value comprises a target partition identification matched with the BGP routing entry, an identification whether the BGP routing entry is announced, and a target node identification.

13. The method as claimed in claim 12, wherein the step of determining the target node according to the community attribute value, comprises: determining, by the data exchange system of the target subnet, the target node according to the target node identification of the community attribute value.

14. The method as claimed in claim 1, wherein the preset attribute configuration rule comprises: determining a rule whether the data exchange system of each subnet and each node receive or send the BGP routing entry, according to the community attribute value.

15. A cloud network transmission routing system applied to a BGP network, the BGP network comprising a plurality of subnets, the plurality of subnets comprising a source subnet and a target subnet; the source subnet comprising a data exchange system of the source subnet and at least one source node, and the target subnet comprising a data exchange system of the target subnet and at least one target node;
the data exchange system of the source subnet configured to receive a BGP routing entry sent from the source node, according to a preset attribute configuration rule, determine the target subnet according to a community attribute value of the BGP routing entry, and send the BGP routing entry to the data exchange system of the target subnet, according to the preset attribute configuration rule; wherein the BGP routing entry comprises a network segment identification of the source node and the community attribute value;
the data exchange system of the target subnet configured to receive the BGP routing entry according the preset attribute configuration rule, determine the target node according to the community attribute value, and send the network segment identification of the source node to the target node, according to the preset attribute configuration rule.

16. The system as claimed in claim 15, wherein the data exchange system of the source subnet comprises at least one core switch configured to receive the BGP routing entry.

17. The system as claimed in claim 16, wherein the core switch of the source subnet is further configured to determine whether a source area identification is comprised in the community attribute value of the BGP routing entry; if the source area identification is comprised in the community attribute value of the BGP routing entry, the core switch is further configured to send the BGP routing entry to other nodes of the source subnet.

18. The system as claimed in claim 15, wherein the data exchange system of the source subnet further comprises at least one relay switch configured to receive the BGP routing entry sent from the source node, according to the preset attribute configuration rule, and send the BGP routing entry to the core switch.

19. The system as claimed in claim 18, wherein after the relay switch of the source subnet receives the BGP routing entry sent from the source node, the relay switch of the source subnet is further configured to add a source area identification to the community attribute value of the BGP routing entry.
